# EUROPÄISCHE PATENTSCHRIFT

(11) **EP 3 177 901 B1**
(45) Veröffentlichungstag und Bekanntmachung des Hinweises auf die Patenterteilung: **04.12.2019**
(21) Anmeldenummer: 15738903.2
(22) Anmeldetag: 16.07.2015
(51) Int. Cl.: G01N 25/08, G01K 1/02, G01K 3/14, G01K 13/02

(54) **FRÜHWARNSYSTEM FÜR KONDENSATIONSINDUZIERTE WASSERSCHLÄGE**
EARLY WARNING SYSTEM FOR CONDENSATION-INDUCED WATER SHOCKS
SYSTÈME D'ALERTE PRÉCOCE POUR DES COUPS DE BÉLIER INDUITS PAR CONDENSATION

(30) Priorität: 07.08.2014 DE 102014111263
(43) Veröffentlichungstag der Anmeldung: 14.06.2017
(73) Patentinhaber: Endress+Hauser Flowtec AG, 4153 Reinach (CH)
(72) Erfinder: HÖCKER, Rainer, 79761 Waldshut (DE); POPP, Oliver, CH-4104 Oberwil (CH)
(74) Vertreter: Andres, Angelika Maria
(86) Internationale Anmeldenummer: PCT/EP2015/066259
(87) Internationale Veröffentlichungsnummer: WO 2016/020164

(56) Entgegenhaltungen:
- DE-A1- 3 113 697
- US-A1- 2014 166 115
- BARNA I F ET AL: "Experimental and theoretical study of steam condensation induced water hammer phenomena", NUCLEAR ENGINEERING AND DESIGN, AMSTERDAM, NL, Bd. 240, Nr. 1, 1. Januar 2010 (2010-01-01), Seiten 146-150, XP026794687, ISSN: 0029-5493 [gefunden am 2009-12-08]

## Beschreibung

Die Erfindung betrifft eine Vorrichtung und ein Verfahren zur frühzeitigen Warnung vor kondensationsinduzierten Wasserschlägen in einem ein Fluid führenden Rohr. Dabei liegt das Fluid zu zumindest einem ersten Anteil in der Dampfphase vor und im Falle von Kondensationsbildung zu einem zweiten Anteil in Form eines Kondensats.

Der Begriff Wasserschlag umfasst mehrere physikalische Phänomene, bei welchen durch Wasser ein starker mechanischer Stoß erzeugt wird. Die Ursache liegt in der geringen Komprimierbarkeit von Wasser. Im Falle von Dampfsystemen treten Wasserschläge in Form von Kondensationsstößen auf, welche u. a. bei Druckerhöhungen beobachtbar sind. Im Prinzip werden diesbezüglich drei Phänomene unterschieden, welche unter dem Begriff kondensationsinduzierter Wasserschlag summiert werden können. Man spricht von einem Dampfschlag, wenn Dampfblasen in Wasser implodieren.

Gelegentlich wird dieses Phänomen in der Literatur auch als Wasserschlag bezeichnet. Ein Tropfenschlag dagegen liegt vor, wenn Tröpfchen mit hoher Geschwindigkeit auf eine Oberfläche treffen. Und schließlich bezeichnet Kavitation eine mikroskopische Form von Dampfschlägen.

Kondensationsinduzierte Wasserschläge sind in Dampfsystemen, Rohren mit einem kondensierenden Gas, insbesondere Dampfleitungen, aber auch Kesseln oder thermischen Solaranlagen von Bedeutung. Beispielsweise können sie beim Aufheizen eines Fluids durch gezieltes Einleiten von Dampf in eine Flüssigkeit auftreten. Aber auch während des Betriebes kann es zu ungewollten kondensationsinduzierten Wasserschlägen kommen, wenn vorhandenes Kondensat unzureichend aus dem jeweiligen medienführenden Bauteil wie einem Behälter, Kessel oder Rohr, entfernt worden ist und heißer Dampf in die kalte Flüssigkeit einströmt. Als Folge können Druckspitzen von bis zu mehreren hundert bar entstehen mit der möglichen Folge schwerer Schäden an dem jeweiligen Bauteil. Kondensationsinduzierte Wasserschläge gehören zu den häufigsten Ursachen schwerer Unfälle, beispielsweise in Dampfkraftwerken oder Dampfkesselanlagen.

US 2014/0166115 A1 offenbart ein Verfahren bzw eine Vorrichtung zur Warnung vor Wasserschlägen.

Die zugrunde liegenden Mechanismen sind aus einer Vielzahl von Veröffentlichungen bekannt. Im Folgenden soll beispielhaft die Entstehung von Dampfschlägen näher beschrieben werden. Durch den Einschluss einer Dampfblase innerhalb des sehr viel kälteren Kondensats wird die Dampfblase von weiterer Dampf- bzw. Energiezufuhr abgeschnitten, sprich isoliert. In der Folge gibt die Dampfblase ihre Energie an das Kondensat ab und kühlt bis auf die Temperatur des Kondensats herunter. Entsprechend fällt auch der Druck in der Dampfblase von einem Ausgangswert von einigen bar auf wenige mbar ab. Aufgrund des hohen Wärmeübergangskoeffizienten zwischen Dampf und Kondensat erfolgt dieser Vorgang in einem sehr kurzen Zeitintervall, üblicherweise innerhalb weniger Millisekunden.

Während des Vorgangs zieht sich die Oberfläche des Kondensats, welche die Dampfblase umgibt, in Richtung des Zentrums der Dampfblase zusammen. Im Zentrum treffen die Oberflächen des Kondensats in Bezug auf die verschiedenen Raumrichtungen alle aufeinander. Entsprechend kommt es zu hohen Druckspitzen, welche spontan, aber auch durch wiederholtes Auftreten zu schweren Schäden am jeweiligen medienführenden Bauteil sowie eventuell darin bzw. daran befestigten Messvorrichtungen führen, bis hin zum Bersten mit der Folge eines Austritts des jeweiligen Mediums in die Umgebung.

Die Bedingungen für das Auftreten von Dampfschlägen in einem von einem Fluid durchflossenen Rohr sind beispielsweise in den Inproceedings zum "8th International Topical Meeting on Nuclear Thermal-Hydraulics, Operation and Safety" im Artikel von I. F. Barna, L.Varga und Gy. Ezsöl mit dem Titel "Steam Condensation Induced Water Hammer Simulations for Different Pipelines in Nuclear Reactor" (http://www.kfki.hu/-barnai/N8P0220.pdf, abgerufen am 01.08.2014) und in Barna I. F. et al, "Experimental and theoretical study of steam condensation induced water hammer phenomena", in Nuclear Engineering and Design, Bd. 240, Nr. 1, 1. Januar 2010, Seiten 146-150 aufgelistet:
a) Die Rohrleitung muss horizontal sein.
b) Die Temperaturdifferenz zwischen Dampf und Kondensat muss mindestens 20K betragen.
c) Das Verhältnis von Länge und Durchmesser der Rohrleitung muss größer als 24 sein.
d) Die Froude-Zahl, welche das Verhältnis von Trägheitskräften zu Schwerekräften innerhalb eines hydrodynamischen Systems darstellt, muss kleiner als 1 sein.
e) Das benachbarte Dampfvolumen muss hinreichend groß sein,
f) Die auftretende Druckspitze muss mind. 10bar über dem maximal zulässigen Betriebsdruck sein, um einen signifikanten Schaden zu verursachen.

Die Liste verdeutlicht, dass das Auftreten kondensationsinduzierter Wasserschläge, insbesondere Dampfschläge, in aller Regel von einer Vielzahl zusammenwirkender Faktoren abhängt. Die Vorhersage, wann ein kondensationsinduzierter Wasserschlag, insbesondere ein Dampfschlag auftritt, ist entsprechend keineswegs trivial. Da aber der dadurch verursachte Schaden immens sein kann, wäre ein Frühwarnsystem für das Auftreten kondensationsinduzierter Wasserschläge wünschenswert.

Der vorliegenden Erfindung liegt deshalb die Aufgabe zugrunde eine Vorrichtung bereitzustellen, welche zuverlässig und frühzeitig das mögliche Auftreten kondensationsinduzierter Wasserschlägen detektiert.

Diese Aufgabe wird erfindungsgemäß gelöst durch ein Verfahren und eine Vorrichtung zur frühzeitigen Warnung vor kondensationsinduzierten Wasserschlägen und oder Dampfschlägen nach Anspruch 1 bzw 3.

Dem Prinzip der Auswertung der Temperaturdifferenz zwischen Dampf und Kondensat liegt folgende Analyse der eingangs genannten Bedingungen für das Auftreten kondensationsinduzierter Wasserschläge in einem Rohr zugrunde:
Die Bedingungen a), c) und e) sind in einem typischen Dampfsystem, bzw. Dampfverteilersystem normalerweise erfüllt, da die jeweiligen Rohre oder Rohrleitungen zwangsläufig über weite Strecken im Wesentlichen waagerecht angeordnet sind. Dadurch ist implizit auch das Dampfvolumen sehr groß.

Das Kondensat befindet sich in der Regel im unteren Bereich der Rohrleitung. Durch das typischerweise geringe Gefälle in im Wesentlichen waagerecht angeordneten Rohrleitungen ist die Fließgeschwindigkeit des Kondensats sehr gering. Deshalb ist auch Bedingung d) in einer Vielzahl von Fällen erfüllt.

Bedingung f) kann grundsätzlich zu einem sofortigen Schaden führen, beispielsweise dadurch, dass eine Dichtung aus ihrer Position gedrückt wird, was eine Undichtigkeit mit der Folge von Austritt von Medium aus der Rohrleitung bewirkt. Selbst wenn Bedingung f) nicht erfüllt ist, können sich vielfach wiederholende Druckspitzen langfristig zu Schäden führen, die sich z. B. durch Ausfall von Messtechnik bemerkbar machen.

Die bisher genannten Bedingungen in Rohren sind nahezu unvermeidbar, aber noch nicht hinreichend für das Auftreten kondensationsinduzierter Wasserschläge. Dies ist der letzten Bedingung b) geschuldet. Nur, wenn die Temperaturdifferenz zwischen Dampf (T_{D}) und Kondensat (T_{K}) hinreichend groß wird, wird auch das Risiko eines kondensationsinduzierten Wasserschlages signifikant. Nun ist es so, dass sich gerade Bedingung b) von außen, also durch Wahl der Betriebszustände, beeinflussen lässt. Daher ist eine Überwachung der Temperaturen hinreichend zur frühzeitigen Warnung vor kondensationsinduzierten Wasserschlägen.

Die Erfindung lässt viele verschiedene Ausführungsformen zu, welche Gegenstand der Unteransprüche sind. Insbesondere sind verschiedene Möglichkeiten der Anordnung der Temperatursensoren am oder im Rohr möglich.

Es ist von Vorteil, wenn der erste Temperatursensor und der zweite Temperatursensor jeweils eine Teilkomponente eines ersten Temperaturfühlers mit einem ersten Gehäuse und eines zweiten Temperaturfühlers mit einem zweiten Gehäuse ist, wobei der erste Temperaturfühler und der zweite Temperaturfühler an der Wandung des Rohres befestigt sind und ins Innere des Rohres hineinragen, und wobei der erste Temperaturfühler und der zweite Temperaturfühler so im Rohr angeordnet sind, dass der erste Temperatursensor und der zweite Temperatursensor die Wandung des Rohres nicht berühren. Der Temperaturfühler umfasst also den Temperatursensor und das Gehäuse. Darüber hinaus umfasst ein Temperaturfühler selbstverständlich auch etwaige elektronische Komponenten zur Auslesung und Auswertung der Temperatur und ggf. auch eine Energieversorgungseinheit. Vorzugsweise gewährleistet das Gehäuse eine Isolierung gegen der Wandung des Rohres. Die Isolierung sollte derart ausgestaltet sein, dass die Temperatur der Wandung keinen Einfluss auf die Temperaturmessung jeder der beiden Temperatursensoren hat. Beispielsweise kann das Gehäuse zylindrische Form aufweisen, dessen Eindringtiefe in das Rohr entsprechend der jeweiligen Geometrie angepasst wird und dessen Material eine niedrige Wärmeleitfähigkeit aufweist.

In einer bevorzugten Ausführung ist der erste Temperaturfühler im oberen Bereich des Rohres befestigt, so dass sich der erste Temperatursensor im oberen Drittel entlang einer vertikalen diametralen Verbindungslinie durch das Rohr befindet, und der zweite Temperaturfühler ist im unteren Bereich des Rohres befestigt, so dass sich der zweite Temperatursensor in unmittelbarer Umgebung der Wandung des Rohres auf dessen unterer Seite befindet. Auf diese Weise kann gewährleistet werden, dass der der erste Temperaturfühler die Temperatur des Dampfes (T_{D}) und der zweite Temperaturfühler die Temperatur des Kondensats (T_{K}) sicher misst.

Alternativ ist in einer weiteren bevorzugten Ausführung der erste Temperaturfühler im unteren Bereich des Rohres befestigt, so dass sich das erste Sensorelement im oberen Drittel entlang einer vertikalen diametralen Verbindungslinie durch das Rohr befindet, und der zweite Temperaturfühler ist im oberen Bereich des Rohres befestigt, so dass sich das zweite Sensorelement in unmittelbarer Umgebung der Wandung des Rohres auf dessen unterer Seite befindet. In diesem Beispiel misst wieder der erste Temperaturfühler die Temperatur des Dampfes (T_{D}), während der zweite die Temperatur des Kondensats (T_{K}) misst. Diese Anordnung des ersten Temperaturfühlers vom unteren Bereich aus hat den Vorteil, dass am Gehäuse des zweiten Temperaturfühlers ablaufendes Kondensat die Messung der Temperatur des Dampfes (T_{D}) nicht beeinflusst. Es ist bei dieser Ausführung wichtig, dass jeder der beiden Temperaturfühler derart positioniert werden, dass er der jeweils gegenüberliegenden Wandung des Rohres nahekommt, diese aber nicht berührt.

In einer besonders bevorzugten Ausgestaltung sind der erste Temperaturfühler und der zweite Temperaturfühler beide im oberen Bereich des Rohres oder im unteren Bereich des Rohres angebracht, wobei die beiden Gehäuse unterschiedliche Längen aufweisen. Bei einer Anordnung von dergleichen Seite des Gehäuses ausgehend können die beiden Temperaturfühler besonders einfach miteinander kontaktiert werden, um die Temperaturdifferenz zu bestimmen.

In einer alternativen Ausgestaltung sind der erste Temperatursensor und der zweite Temperatursensor in einem Temperaturfühler mit einem Gehäuse angeordnet, wobei der Temperaturfühler an der Wandung des Rohres befestigt ist und ins Innere des Rohres hineinragt, und wobei der Temperaturfühler so im Rohr angeordnet ist, dass der erste Temperatursensor und der zweite Temperatursensor die Wandung des Rohres nicht berühren. Diese Ausführung ist noch kompakter realisierbar als die davor genannte.

Es ist außerdem von Vorteil, wenn der Temperaturfühler im oberen Bereich des Rohres oder im unteren Bereich des Rohres befestigt ist, wobei das Gehäuse im Wesentlichen stabförmig ausgearbeitet ist, und wobei die beiden Temperatursensoren in unterschiedlichen Bereichen des Gehäuses angeordnet sind, so dass der erste Temperatursensor sich im Bereich des kondensierten Teils des Fluides befindet, und der zweite Temperatursensor sich in dem Bereich befindet, in welchem das Fluid in der Dampfphase vorliegt.

In einer besonders bevorzugten Ausgestaltung ist ein Drucksensor in die Wandung des Rohres integriert, welcher Drucksensor dazu ausgestaltet ist, den statischen Druck im Rohr zu erfassen, wobei in der Elektronikeinheit eine Dampfdruckkurve des Fluides hinterlegt ist, und wobei nur dann eine Meldung generiert wird, wenn zusätzlich zum Überschreiten des Grenzwertes für die Temperaturdifferenz die Temperatur des Dampfes größer ist als eine dem gemessenen statischen Druck gemäß der Dampfdruckkurve entsprechende Referenztemperatur. Die zusätzliche Messung des statischen Druckes erhöht die Vorhersagegenauigkeit für das Auftreten kondensationsinduzierter Wasserschläge zusätzlich.

Die erfindungsgemäße Aufgabe wird ferner gelöst durch ein Verfahren zur frühzeitigen Warnung vor kondensationsindizierten Wasserschlägen und/oder Dampfschlägen in einem ein Fluid führendem Bauteil, insbesondere einem Rohr, welches Fluid zu zumindest einem ersten Anteil in der Dampfphase vorliegt und im Falle von Kondensationsbildung zu einem zweiten Anteil in Form eines Kondensats, wobei die Temperatur des Dampfes gemessen wird, wobei die Temperatur des Kondensats gemessen wird, wobei die Temperaturdifferenz aus der Temperatur des Dampfes und der Temperatur des Kondensats ermittelt wird, und wobei bei Erreichen eines vorgegebenen Grenzwerts für die Temperaturdifferenz eine Meldung generiert wird.

Dabei ist es von Vorteil, wenn der statische Druck im Rohr gemessen wird, wobei die Temperatur des Dampfes mit der aus einer Dampfdruckkurve zu dem statischen Druck gehörigen Referenztemperatur verglichen wird, und wobei nur dann eine Meldung generiert wird, wenn die Temperatur des Dampfes größer ist als die Referenztemperatur.

Die erfindungsgemäße Vorrichtung und/oder das erfindungsgemäße Verfahren nach mindestens einem der Ansprüche findet bevorzugt Verwendung in der Prozess-und/oder Automatisierungstechnik.

Die Erfindung sowie ihre Vorteile werden anhand der nachfolgenden Figuren Fig. 1 bis Fig. 4 näher erläutert. Es zeigen
Fig. 1 eine schematische Zeichnung eines Aufbaus der Vorrichtung gemäß Anspruch 3,
Fig. 2 eine schematische Zeichnung eines Aufbaus der Vorrichtung gemäß Anspruch 4,
Fig. 3 eine schematische Zeichnung eines Aufbaus der Vorrichtung gemäß Anspruch 5, und
Fig. 4 eine schematische Zeichnung eines Aufbaus der Vorrichtung gemäß Anspruch 6 und/oder 7, und mit einem zusätzlichen Drucksensor.

In den Figuren sind gleiche Merkmale mit gleichen Bezugszeichen gekennzeichnet. Die erfindungsgemäße Vorrichtung in ihrer Gesamtheit hat das Bezugszeichen 1. Striche an einem Bezugszeichen weisen jeweils auf unterschiedliche Ausführungsbeispiele hin.

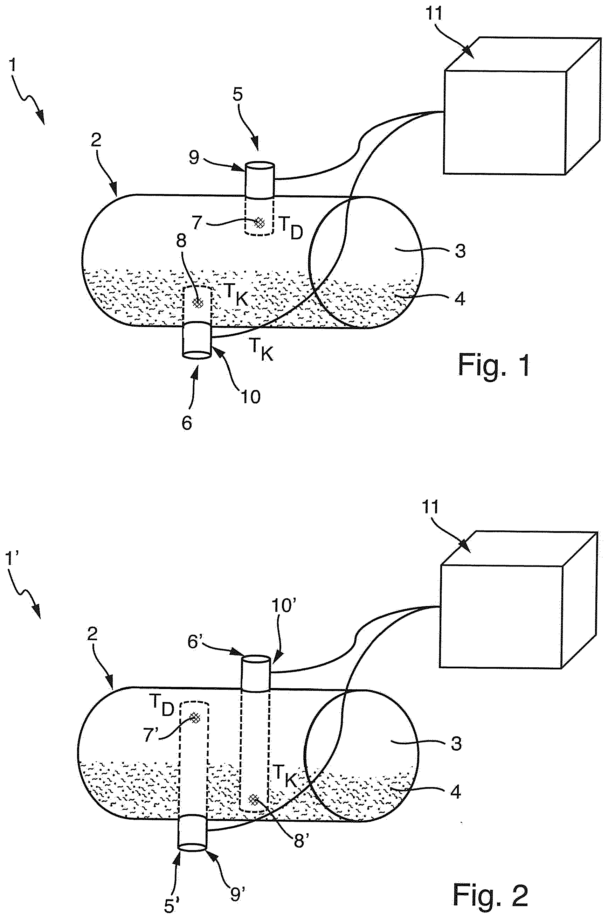

In Fig. 1 ist eine schematische Zeichnung eines ersten Ausführungsbeispiels einer erfindungsgemäßen Vorrichtung 1 gemäß Anspruch 3 gezeigt. Zu sehen ist ein Rohr 2, welches zu einem ersten Anteil von einem Fluid in der Dampfphase, kurz einem Dampf 3 durchströmt wird, und zu einem zweiten Anteil durch ein Kondensat 4. An der Wandung des Rohres 2 sind zwei Temperaturfühler 5, 6 mit jeweils einem Temperatursensor 7, 8 und jeweils einem Gehäuse 9, 10 befestigt, welche ins Innere des Rohres 2 hineinragen. Keiner der beiden Temperaturfühler 5,6 berührt die Wandung des Rohres 2, so dass dessen Temperatur die Messungen der Temperaturen des Dampfes (T_{D}) 3 und des Kondensats(Tₖ4) 4 nicht beeinflussen. In diesem Beispiel misst der erste Temperaturfühler 5 die Temperatur des Dampfes (T_{D}) 3 und der zweite Temperaturfühler 6 die Temperatur des Kondensats (T_{K}) 4. Innerhalb der Elektronikeinheit 11 wird schließlich zu bestimmbaren Zeitpunkten jeweils die Temperaturdifferenz ΔT=T_{D} -T_{K} ermittelt und beim Überschreiten eines bestimmten bestimmbaren Grenzwertes eine Meldung generiert.

Ein weiteres Ausführungsbeispiel für eine erfindungsgemäße Vorrichtung 1' ist in Fig. 2 skizziert. Wieder ist das Rohr 2 zu sehen, welches zu einem ersten Anteil von einem Dampf 3 durchströmt wird, und zu einem zweiten Anteil durch ein Kondensat 4. Der erste Temperaturfühler 5' ist im unteren Bereich des Rohres 2 befestigt, so dass sich der erste Temperatursensor 7'im oberen Drittel entlang einer (nicht eingezeichneten) vertikalen diametralen Verbindungslinie durch das Rohr 2 angeordnet ist. Der zweite Temperaturfühler 6' dagegen ist im oberen Bereich des Rohres 2 befestigt, so dass sich der zweite Temperatursensor 8' in unmittelbarer Umgebung der Wandung des Rohres 2 auf dessen unterer Seite befindet. In diesem Fall misst wieder der erste Temperaturfühler 5' die Temperatur des Dampfes (T_{D}) 4 und der zweite Temperaturfühler 6' die Temperatur des Kondensats (T_{K}) 3. Der Einbau des zweiten Temperaturfühlers 5' im unteren Bereich des Rohres 2 hat den Vorteil, dass sich an diesem Temperaturfühler 5' ablagerndes Kondensat die Messung der Temperatur des Dampfes (T_{D}) 3 nicht beeinflusst.

Jeder der beiden Temperaturfühler ist derart positioniert, dass er der jeweils gegenüberliegenden Wandung des Rohres 2 nahekommt, diese aber nicht berührt.

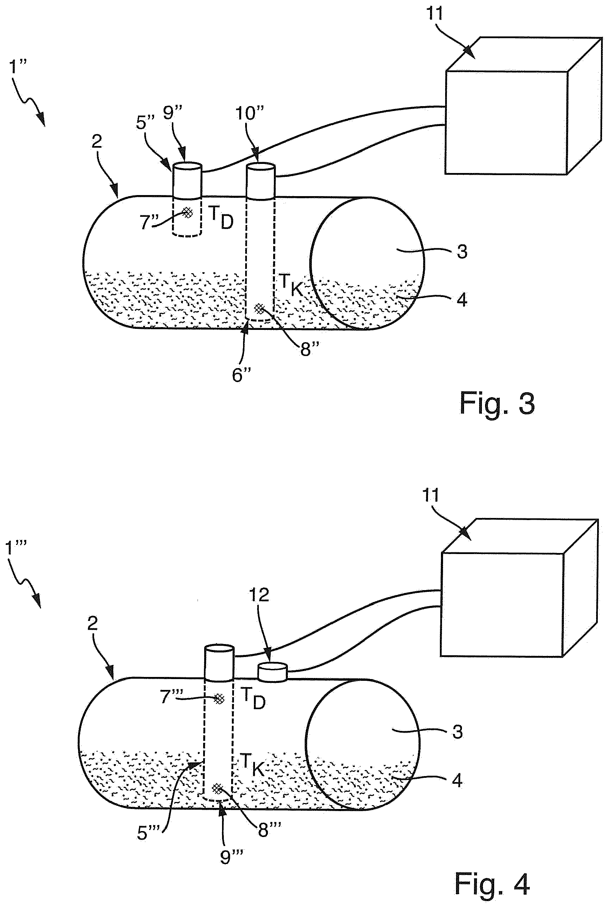

In Fig. 3 ist eine Ausführung einer erfindungsgemäßen Vorrichtung 1" gemäß Anspruch 5 gezeigt. Der erste 5" und zweite 6" Temperaturfühler sind beide im oberen Bereich des Rohres 2 befestigt. Damit gewährleistet ist, dass einer der beiden Temperaturfühler 5", 6" die Temperatur des Dampfes 3 und der andere diejenige des Kondensats 4 erfasst, müssen die beiden Gehäuse 9", 10" der beiden Temperaturfühler 5", 6" unterschiedliche Längen aufweisen, und die Temperatursensoren 7", 8" jeweils im endstirnigen Bereich des jeweiligen Gehäuses 9", 10" angeordnet sein. Es versteht sich von selbst, dass die beiden Temperaturfühler 5", 6" auch im unteren Bereich des Rohres 2 an dessen Wandung befestigt sein können.

Eine weitere Alternative für eine erfindungsgemäße Vorrichtung 1''' ist in Fig. 4 gezeigt. Beide Temperatursensoren 7''',8''' sind in einem Temperaturfühler 5''' mir einem Gehäuse 9''' angeordnet. Dieser Temperaturfühler 5''' ist an der Wandung des Rohres 2 befestigt und ragt in dessen Inneres. Während der Temperaturfühler 5''' in dieser Ansicht vom unteren Bereich des Rohres angebracht ist, kann er selbstverständlich in einer anderen Variante auch im oberen Bereich des Rohres 2 integriert sein. Das Gehäuse 9''' ist im Wesentlichen stabförmig ausgearbeitet und die beiden Temperatursensoren 7''', 8''' sind in unterschiedlichen Bereichen des Gehäuses 9''' angeordnet. In jedem Fall muss gewährleistet sein, dass einer der beiden Temperatursensoren 7''', in der hier gezeigten Ansicht der erste, zuverlässig die Temperatur des Dampfes (T_{D}) 3 und der andere der beiden Temperatursensoren 8"', in der hier gezeigten Ansicht der zweite, zuverlässig die Temperatur des Kondensats (T_{K}) 4 misst.

In Fig. 4 ist weiterhin noch ein Drucksensor 12 gemäß Anspruch 8 eingezeichnet. Dieser ist optional und muss in einer Ausführung gemäß Fig. 4 nicht zwangsläufig integriert werden. Der Drucksensor 12 dient der Erfassung des statischen Drucks in der Rohrleitung. Dies wiederum erhöht unter Umständen die Zuverlässigkeit der Vorhersage von möglichen kondensationsinduzierten Wasserschlägen innerhalb der Rohrleitung.

Folgende Betriebszustände einer erfindungsgemäßen Vorrichtung 1,1', 1", 1''' sind möglich und erläutern mögliche Szenarien der erfindungsgemäßen Verfahren:
a) Das Rohr 2 ist ausschließlich von Dampf 3 durchströmt und frei von Kondensat 4. In diesem Falle zeigen die beiden Temperatursensoren 7,8 bis auf wenige Grad die gleiche Temperatur an. Entsprechend ist die ermittelte Temperaturdifferenz ΔT=T_{D} -T_{K} gering und es wird keine Meldung generiert.
b) Das Rohr 2 ist vollständig mit Kondensat 4 gefüllt und führt keinen Dampf 3. Auch in diesem Fall beträgt die ΔT=T_{D} -T_{K} Temperaturdifferenz maximal wenige Grad Kelvin und es wird keine Meldung generiert.
c) Wenn das Rohr 2 zum Teil mit Dampf 3 und zum Teil mit Kondensat 4 durchströmt ist, beträgt die Temperaturdifferenz ΔT=T_{D} -T_{K} im Normalfall ebenfalls nur wenige Grad Kelvin. Auch dann wird keine Meldung generiert.
d) Ist das Rohr 2 wir im Falle c) zum Teil mit Kondensat 4 und zum Teil mit Dampf 3 durchströmt, wobei die Temperaturdifferenz ΔT=T_{D} -T_{K} zwischen beiden einen bestimmbaren Grenzwert überschreitet, beispielsweise 20K, wird eine Meldung generiert. Im Falle, dass zusätzlich ein Drucksensor 11 vorhanden ist, wird die Meldung nur dann generiert, wenn die gemessene Temperatur des Dampfes (T_{D}) 4 gleich oder größer ist als die zum gemessenen statischen Druck gehörige Referenztemperatur (T_{R}), welche anhand einer Dampfdruckkurve bestimmt wird.

Es versteht sich von selbst, dass zahlreiche weitere Anordnungen der beiden Temperaturfühler 5,6 denkbar sind, welche alle ebenfalls unter die Erfindung fallen. Ebenso versteht es sich von selbst, dass auch mehr als zwei Temperatursensoren 7,8 verwendet werden können, dass es unterschiedlichste Möglichkeiten für die Kontaktierung der Temperatursensoren 7,8 untereinander und der Verbindung mit sowie der Anordnung einer Elektronikeinheit 11 gibt. Davon hängt auch die genaue Implementierung einer Auswertung der Temperaturmessung ab. Ähnliches gilt für die Temperaturfühler 5,6, die Anordnung mindestens eines Temperatursensors 7,8 in einem Temperaturfühler 5,6 und die Ausgestaltung des jeweiligen Gehäuses 9,10. Schließlich sind auch vielfältige Möglichkeiten der Befestigung der Temperatursensoren 7,8 im Temperaturfühler 5,6 bzw. der Temperaturfühler 5,6 an der Wandung des Rohres 2 sowie deren dichter Integrierung bis ins Rohrinnere vorhanden, welche hier nicht weiter beschrieben wurden.

### Bezugszeichenliste

- 1: Erfindungsgemäße Vorrichtung
- 2: Rohr
- 3: Dampf
- 4: Kondensat
- 5: Temperaturfühler 1
- 6: Temperaturfühler 2
- 7: Temperatursensor 1
- 8: Temperatursensor 2
- 9: Gehäuse 1
- 10: Gehäuse 2
- 11: Elektronikeinheit
- 12: Drucksensor

## Patentansprüche

1. Verfahren zur frühzeitigen Warnung vor kondensationsindizierten Wasserschlägen und/oder Dampfschlägen in einem ein Fluid führenden, horizontalen Rohr (2),
wobei ein Verhältnis von Länge und Durchmesser des Rohres größer als 24 ist,
wobei das Fluid zu zumindest einem ersten Anteil Form eines Dampfes (3) vorliegt und im Falle von Kondensationsbildung zu einem zweiten Anteil in Form eines Kondensats (4), welches sich in einem unteren Bereich des Rohres befindet
wobei die Temperatur des Dampfes (T_{D}) gemessen wird,
wobei die Temperatur des Kondensats (T_{K}) gemessen wird,
wobei die Temperaturdifferenz (ΔT) aus der Temperatur des Dampfes (T_{D}) und der Temperatur des Kondensats (T_{K}) ermittelt wird,
wobei die Temperaturdifferenz (ΔT) ein Maß für das Auftreten kondensationsinduzierter Wasserschläge ist,
und wobei bei Erreichen eines vorgegebenen Grenzwerts für die Temperaturdifferenz (ΔT), ab welcher eine signifikante Wahrscheinlichkeit für das Auftreten eines kondensationsinduzierten Wasserschlags vorliegt, eine Meldung generiert wird.

2. Verfahren nach Anspruch 1,
wobei der statische Druck im Rohr gemessen wird,
wobei die Temperatur des Dampfes (T_{D}) mit der aus einer Dampfdruckkurve zu dem statischen Druck gehörigen Referenztemperatur (T_{R}) verglichen wird, und wobei nur dann eine Meldung generiert wird, wenn die Temperatur des Dampfes (T_{D}) größer ist als die Referenztemperatur (T_{R}).

3. Vorrichtung (1) zur frühzeitigen Warnung vor kondensationsinduzierten Wasserschlägen und/oder Dampfschlägen in einem ein Fluid führenden, horizontalen Rohr (2),
wobei ein Verhältnis von Länge und Durchmesser des Rohres größer als 24 ist, und
wobei das Fluid zu zumindest einem ersten Anteil in der Dampfphase (3) in Form eines Dampfes 3 vorliegt und im Falle von Kondensationsbildung zu einem zweiten Anteil in Form eines Kondensats (4), welches sich in einem unteren Bereich des Rohres befindet,
welche Vorrichtung zur Durchführung des Verfahrens nach einem der vorherigen Ansprüche ausgestaltet ist, beziehungsweise welche Vorrichtung zumindest zwei Temperatursensoren (7,8) umfasst, welche am oder im Rohr (2) anordenbar und bei Ausführung des Verfahrens fluidberührend sind, und zumindest eine Elektronikeinheit (11),
wobei der erste Temperatursensor (7) so am oder im Rohr anordenbar ist, dass er die Temperatur des Dampfes 3 (T_{D}) misst, wobei der zweite Temperatursensor (8) so am oder im Rohr anordenbar ist, dass er die Temperatur des Kondensats 4 (T_{K}) misst,
wobei die mindestens eine Elektronikeinheit (11) so ausgebildet ist, dass sie die Temperaturdifferenz (ΔT) aus der Temperatur des Dampfes (T_{D}) und der Temperatur des Kondensats (T_{K}) ermittelt, wobei die Temperaturdifferenz (ΔT) ein Maß für das Auftreten kondensationsinduzierter Wasserschläge und/oder Dampfschläge ist,
und dass sie bei Erreichen eines vorgegebenen Grenzwerts für die Temperaturdifferenz (ΔT), ab welcher eine signifikante Wahrscheinlichkeit für das Auftreten eines kondensationsinduzierten Wasserschlags und/oder Dampfschlags vorliegt, eine Meldung generiert.

4. Vorrichtung (1) nach Anspruch 3,
wobei der erste Temperatursensor (7) und der zweite Temperatursensor (8) jeweils eine Teilkomponente eines ersten Temperaturfühlers (5) mit einem ersten Gehäuse (9) und eines zweiten Temperaturfühlers (6) mit einem zweiten Gehäuse (10) sind,
wobei der erste Temperaturfühler (5) und der zweite Temperaturfühler (6) so an der Wandung des Rohres (2) befestigbar befestigt sind dass sie ins Innere des Rohres (2) hineinragen,
und wobei der erste Temperaturfühler (5) und der zweite Temperaturfühler (6) so im Rohr anordenbar sind, dass der erste Temperatursensor (7) und der zweite Temperatursensor (8) die Wandung des Rohres (2) nicht berühren.

5. Vorrichtung (1) nach Anspruch 3 oder 4,
wobei der erste Temperaturfühler (5) so im oberen Bereich des Rohres (2) befestigbar ist, dass sich das erste Temperatursensor (7) im oberen Drittel entlang einer vertikalen diametralen Verbindungslinie durch das Rohr (2) befindet, und wobei der zweite Temperaturfühler (6) so im unteren Bereich des Rohres (2) befestigbar ist, dass sich der zweite Temperatursensor (8) in unmittelbarer Umgebung der Wandung des Rohres (2) auf dessen unterer Seite befindet.

6. Vorrichtung (1') nach Anspruch 3 oder 4,
wobei der erste Temperaturfühler (5') so im unteren Bereich des Rohres (2) befestigbar ist, dass sich das erste Sensorelement (7') im oberen Drittel entlang einer vertikalen diametralen Verbindungslinie durch das Rohr (2) befindet, und wobei der zweite Temperaturfühler (6') so im oberen Bereich des Rohres (2) befestigbar ist, dass sich das zweite Sensorelement (8') in unmittelbarer Umgebung der Wandung des Rohres (2) auf dessen unterer Seite befindet.

7. Vorrichtung (1") nach Anspruch 3 oder 4,
wobei der erste Temperaturfühler (5") und der zweite Temperaturfühler (6") beide im oberen Bereich des Rohres (2) oder im unteren Bereich des Rohres (2) anbringbar sind, und wobei die beiden Gehäuse (9", 10") unterschiedliche Längen aufweisen.

8. Vorrichtung (1''') nach Anspruch 3,
wobei der erste Temperatursensor (7''') und der zweite Temperatursensor (8''') in einem Temperaturfühler (5''') mit einem Gehäuse (9''') anordenbar sind, wobei der Temperaturfühler (5''') so an der Wandung des Rohres (2) befestigbar ist, dass er ins Innere des Rohres (2) hineinragt, und wobei der Temperaturfühler (5''') so im Rohr (2) anordenbar ist, dass der erste Temperatursensor (7''') und der zweite Temperatursensor (8''') die Wandung des Rohres (2) nicht berühren.

9. Vorrichtung (1''') nach Anspruch 8,
wobei der Temperaturfühler (5''') im oberen Bereich des Rohres (2) oder im unteren Bereich des Rohres (2) befestigbar ist, wobei das Gehäuse (9''') im Wesentlichen stabförmig ausgearbeitet ist, und wobei die beiden Temperatursensoren (7''', 8''') so in unterschiedlichen Bereichen des Gehäuses (9''') anordenbar sind, dass der erste Temperatursensor (7''') sich im Bereich des kondensierten Teils des Fluides (4) befindet, und der zweite Temperatursensor (8''') sich in dem Bereich befindet, in welchem das Fluid in der Dampfphase (3) vorliegt.

10. Vorrichtung (1''') nach einem der Ansprüche 3-9,
wobei ein Drucksensor (12) in die Wandung des Rohres (2) integrierbar ist, welcher Drucksensor (12) dazu ausgestaltet ist, den statischen Druck im Rohr (2) zu erfassen, wobei in der Elektronikeinheit (11) eine Dampfdruckkurve des Fluides hinterlegt ist, und wobei nur dann eine Meldung generiert wird, wenn zusätzlich zum Überschreiten des Grenzwertes für die Temperaturdifferenz (ΔT) die Temperatur des Dampfes (T_{D}) größer ist als eine dem gemessenen statischen Druck gemäß der Dampfdruckkurve entsprechende Referenztemperatur (T_{R}).

11. Verwendung des Verfahrens nach einem der Ansprüche 1 oder 2 und der Vorrichtung (1) nach einem der Ansprüche 3-10 für die Prozess-und/oder Automatisierungstechnik.

## Claims

1. Procedure for an early warning system for condensation-induced water hammer and/or steam hammer in a horizontal pipe (2) conducting a fluid,
wherein a ratio of the length of the pipe to the diameter of the pipe is greater than 24,
wherein the fluid is present in at least a first amount in the form of a vapor and, in the event of the formation of condensation, it is present in the form of a condensate (4) in a second amount, said condensate being located in a lower part of the pipe
wherein the temperature of the vapor (T_{D}) is measured,
wherein the temperature of the condensate (T_{K}) is measured,
wherein the temperature difference (ΔT) is determined from the temperature of the vapor (T_{D}) and the temperature of the condensate (T_{K}),
wherein the temperature difference (ΔT) is an indicator for the occurrence of condensation-induced water hammer,
and wherein a message is generated if a predefined limit value for the temperature difference (ΔT) is reached, as of which there is a significant probability of the occurrence of condensation-induced water hammer.

2. Procedure as claimed in Claim 1,
wherein the static pressure is measured in the pipe,
wherein the temperature of the vapor (T_{D}) is compared against the reference temperature (T_{R}) corresponding to the static pressure derived from a vapor pressure curve, and wherein a message is only generated if the temperature of the vapor (T_{D}) is greater than the reference temperature (T_{R}).

3. Apparatus (1) designed to provide an early warning for condensation-induced water hammer and/or steam hammer in a horizontal pipe (2) conducting a fluid, wherein a ratio of the length of the pipe to the diameter of the pipe is greater than 24, and
wherein the fluid is present in at least a first amount in the form of a vapor 3 in the vapor phase (3) and, in the event of the formation of condensation, the fluid is present in a second amount in the form of a condensate (4), which is located in a lower part of the pipe,
wherein said apparatus is designed to carry out the procedure as claimed in one of the previous claims, or wherein said apparatus comprises two temperature sensors (7, 8), which can be arranged on or in the pipe (2) and are in contact with fluid when the procedure is performed,
and at least one electronics unit (11),
wherein the first temperature sensor (7) can be arranged on or in the pipe (2) in such a way that it measures the temperature of the vapor 3 (T_{D}),
wherein the second temperature sensor (8) can be arranged on or in the pipe (2) in such a way that it measures the temperature of the condensate 4 (T_{K}), wherein the at least one electronics unit (11) is designed in such a way that it determines the temperature difference (ΔT) from the temperature of the vapor (T_{D}) and the temperature of the condensate (T_{K}), wherein the temperature difference (ΔT) is an indicator for the occurrence of condensation-induced water hammer and/or steam hammer,
and wherein it generates a message if a predefined limit value for the temperature difference (ΔT) is reached, as of which there is a significant probability of the occurrence of condensation-induced water hammer and/or steam hammer.

4. Apparatus (1) as claimed in Claim 3,
wherein the first temperature sensor (7) and the second temperature sensor (8) constitutes, respectively, a sub-component of a first temperature sensing element (5) with a first housing (9) and a second temperature sensing element (6) with a second housing (10),
wherein the first temperature sensing element (5) and the second temperature sensing element (6) can be fixed on the wall of the pipe (2) in such a way that they project into the interior of the pipe (2),
and wherein the first temperature sensing element (5) and the second temperature sensing element (6) can be arranged in the pipe in such a way that the first temperature sensor (7) and the second temperature sensor (8) do not touch the wall of the pipe (2).

5. Apparatus (1) as claimed in Claim 3 or 4,
wherein the first temperature sensing element (5) can be fixed in the upper area of the pipe (2) in such a way that the first temperature sensor (7) is located in the top third along a vertical diametrical connecting line through the pipe (2), and wherein the second temperature sensing element (6) can be fixed in the lower area of the pipe (2) in such a way that the second temperature sensor (8) is located in the direct vicinity of the wall of the pipe (2), on its lower side.

6. Apparatus (1') as claimed in Claim 3 or 4,
wherein the first temperature sensing element (5') can be fixed in the lower area of the pipe (2) in such a way that the first sensor element (7') is located in the top third along a vertical diametrical connecting line through the pipe (2), and wherein the second temperature sensing element (6') can be fixed in the upper area of the pipe (2) in such a way that the second sensor element (8') is located in the direct vicinity of the wall of the pipe (2), on its lower side.

7. Apparatus (1") as claimed in Claim 3 or 4,
wherein the first temperature sensing element (5") and the second temperature sensing element (6") can both be fitted in the upper area of the pipe (2) or in the lower area of the pipe (2), and wherein the two housings (9", 10") have different lengths.

8. Apparatus (1''') as claimed in Claim 3,
wherein the first temperature sensor (7''') and the second temperature sensor (8''') can be arranged in a temperature sensing element (5''') with a housing (9'''), wherein the temperature sensing element (5''') can be fixed on the wall of the pipe (2) in such a way that that it projects into the interior of the pipe (2),
and wherein the temperature sensing element (5''') can be arranged in the pipe (2) in such a way that the first temperature sensor (7''') and the second temperature sensor (8''') do not touch the wall of the pipe (2).

9. Apparatus (1''') as claimed in Claim 8,
wherein the temperature sensing element (5''') can be fixed in the upper area of the pipe (2) or in the lower area of the pipe (2), wherein the housing (9''') essentially has a rod-like design, and wherein the two temperature sensors (7''', 8''') can be arranged in different areas of the housing in such a way that the first temperature sensor (7''') is located in the area of the condensed part of the fluid (4) and the second temperature sensor (8''') is located in the area in which the fluid is present in the vapor phase (3).

10. Apparatus (1''') as claimed in one of the Claims 3 to 9,
wherein a pressure sensor (12) can be integrated in the wall of the pipe (2), wherein said pressure sensor (12) is designed to measure the static pressure in the pipe (2), wherein a vapor pressure curve for the fluid is saved in the electronics unit (11), and wherein a message is only generated if, in addition to the limit value for the temperature difference (ΔT) being exceeded, the temperature of the vapor (T_{D}) is greater than a reference temperature (T_{R}) corresponding to the measured static pressure according to the vapor pressure curve.

11. Utilization of the procedure as claimed in one of the Claims 1 or 2 and the apparatus (1) as claimed in one of the Claims 3 to 10 for process engineering and/or automation engineering.

## Revendications

1. Procédé destiné à alerter de manière précoce des coups de bélier et/ou des coups de vapeur induits par condensation dans un tube (2) horizontal guidant un fluide,
un rapport entre la longueur et le diamètre du tube étant supérieur à 24,
au moins une part du fluide étant présente sous la forme d'une vapeur et, en cas de formation de condensation, une deuxième part étant présente sous la forme d'un condensat (4), qui se trouve dans une partie inférieure du tube procédé pour lequel
la température de la vapeur (T_{D}) est mesurée,
la température du condensat (T_{K}) est mesurée,
la différence de température (ΔT) est déterminée à partir de la température de la vapeur (T_{D}) et de la température du condensat (T_{K}),
la différence de température (ΔT) étant un degré d'apparition de coups de bélier induits par condensation,
et en cas d'atteinte d'un seuil prédéfini pour la différence de température (ΔT), à partir duquel une probabilité significative pour l'apparition d'un coup de bélier induit par condensation, génère un message.

2. Procédé selon la revendication 1,
pour lequel la pression statique à l'intérieur du tube est mesurée,
la température de la vapeur (T_{D}) étant comparée avec la température de référence (T_{R}) correspondant à la pression statique issue d'une courbe de pression de vapeur, et un message n'étant généré que si la température de la vapeur (T_{D}) est supérieure à la température de référence (T_{R}).

3. Dispositif (1) destiné à alerter de manière précoce des coups de bélier et/ou des coups de vapeur induits par condensation dans un tube (2) horizontal guidant un fluide,
un rapport entre la longueur et le diamètre du tube étant supérieur à 24, et
au moins une part du fluide étant présente sous la forme d'une vapeur 3 dans la phase vapeur (3) et, en cas de formation de condensation, une deuxième part étant présente sous la forme d'un condensat (4), qui se trouve dans une partie inférieure du tube,
lequel dispositif est conçu pour la réalisation du procédé selon l'une des revendications précédentes, ou lequel dispositif comprend deux capteurs de température (7, 8), lesquels peuvent être disposés sur ou dans le tube (2) et, lors de l'exécution du procédé, sont en contact avec le fluide,
et au moins une unité électronique (11),
le premier capteur de température (7) pouvant être disposé sur ou dans le tube (2) de telle sorte qu'il mesure la température de la vapeur 3 (T_{D}),
le deuxième capteur de température (8) pouvant être disposé sur ou dans le tube (2) de telle sorte qu'il mesure la température du condensat 4 (T_{K}),
l'au moins une unité électronique (11) étant conçue de telle sorte à ce qu'elle détermine la différence de température (ΔT) à partir de la température de la vapeur (T_{D}) et de la température du condensat (T_{K}), la différence de température (ΔT) étant un degré d'apparition de coups de bélier et/ou de coups de vapeur induits par condensation,
et en cas d'atteinte d'un seuil prédéfini pour la différence de température (ΔT), à partir duquel une probabilité significative pour l'apparition d'un coup de bélier et/ou d'un coup de vapeur induit(s) par condensation, génère un message.

4. Dispositif (1) selon la revendication 3,
pour lequel le premier capteur de température (7) et le deuxième capteur de température (8) constituent respectivement un sous-composant d'une première sonde de température (5) avec un premier boîtier (9) et d'une deuxième sonde de température (6) avec un deuxième boîtier (10),
la première sonde de température (5) et la deuxième sonde de température (6) pouvant être fixées sur la paroi du tube (2) de telle sorte qu'elle pénètrent à l'intérieur du tube (2),
et la première sonde de température (5) et la deuxième sonde de température (6) pouvant être disposées dans le tube de telle sorte que le premier capteur de température (7) et le deuxième capteur de température (8) ne touchent pas la paroi du tube (2).

5. Dispositif (1) selon la revendication 3 ou 4,
pour lequel la première sonde de température (5) peut être fixée dans la zone supérieure du tube (2) de telle sorte que le capteur de température (7) se trouve dans le tiers supérieur le long d'une ligne de liaison diamétrale verticale à travers le tube (2), et la deuxième sonde de température (6) peut être fixée dans la zone inférieure du tube (2) de telle sorte que le deuxième capteur de température (8) se trouve à proximité immédiate de la paroi du tube (2), sur sa face inférieure.

6. Dispositif (1') selon la revendication 3 ou 4,
pour lequel la première sonde de température (5') peut être fixée dans la zone inférieure du tube (2) de telle sorte que le premier élément capteur (7') se trouve dans le tiers supérieur le long d'une ligne de liaison diamétrale verticale à travers le tube (2), et la deuxième sonde de température (6') peut être fixée dans la zone supérieure du tube (2) de telle sorte que le deuxième élément capteur (8') se trouve à proximité immédiate de la paroi du tube (2), sur sa face inférieure.

7. Dispositif (1") selon la revendication 3 ou 4,
pour lequel la première sonde de température (5") et la deuxième sonde de température (6") peuvent être disposées toutes deux dans la zone supérieure du tube (2) ou dans la zone inférieure du tube (2), et les deux boîtiers (9", 10") présentent des longueurs différentes.

8. Dispositif (1''') selon la revendication 3,
pour lequel le premier capteur de température (7''') et le deuxième capteur de température (8''') peuvent être disposés avec un boîtier (9'''), la sonde de température (5''') pouvant être fixé sur la paroi du tube (2) de telle sorte qu'elle pénètre à l'intérieur du tube (2),
et la sonde de température (5''') pouvant être disposée dans le tube (2) de telle sorte que le premier capteur de température (7''') et le deuxième capteur de température (8''') ne touchent pas la paroi du tube (2).

9. Dispositif (1''') selon la revendication 8,
pour lequel la sonde de température (5''') peut être fixée dans la partie supérieure du tube (2) ou dans la zone inférieure du tube (2), le boîtier (9''') étant conçu pour l'essentiel en forme de tige, et les deux capteurs de température (7''', 8''') pouvant être disposés dans différentes zones du boîtier, de sorte que le premier capteur de température (7''') se trouve dans la zone de la partie condensée du fluide (4) et le deuxième capteur de température (8''') se trouve dans la zone, dans laquelle le fluide est présent dans la phase vapeur (3).

10. Dispositif (1''') selon l'une des revendications 3 à 9,
pour lequel un capteur de pression (12) peut être intégré dans la paroi du tube (2), lequel capteur de pression (12) est conçu de telle sorte à mesurer la pression statique à l'intérieur du tube (2), une courbe de pression de vapeur du fluide étant enregistrée dans l'unité électronique (11), et un message étant généré uniquement lorsque, en plus du dépassement du seuil pour la différence de température (ΔT), la température de la vapeur (T_{D}) est supérieure à une température de référence (T_{R}) correspondant à la pression statique mesurée selon la courbe de pression de vapeur.

11. Utilisation du procédé selon l'une des revendications 1 ou 2 et du dispositif (1) selon l'une des revendications 3 à 10 pour la technique des process et/ou d'automatisation.
